(19) Europäisches Patentamt
European Patent Office
Office européen des brevets

(11) Numéro de publication : **0 196 981**
**B1**

(12) # FASCICULE DE BREVET EUROPÉEN

(45) Date de publication du fascicule du brevet : **19.10.88**

(51) Int. Cl.[4] : **C 08 G 69/34**

(21) Numéro de dépôt : **86420035.7**

(22) Date de dépôt : **05.02.86**

(54) **Procédé de préparation de copolyamides à base de hexaméthylènediamine, d'acide adipique et d'acide dimère.**

(30) Priorité : **07.02.85 FR 8501912**

(43) Date de publication de la demande : **08.10.86 Bulletin 86/41**

(45) Mention de la délivrance du brevet : **19.10.88 Bulletin 88/42**

(84) Etats contractants désignés : **AT BE CH DE FR GB IT LI LU NL SE**

(56) Documents cités : **EP-A- 0 022 048**

(73) Titulaire : **RHONE-POULENC CHIMIE**
**25, quai Paul Doumer**
**F-92408 Courbevoie Cédex (FR)**

(72) Inventeur : **Coquard, Jean**
**Route du Crest**
**F-69290 Grezieu-la-Varenne Craponne (FR)**
Inventeur : **Goletto, Jean**
**24, Chemin des Mouilles**
**F-69130 Ecully (FR)**

(74) Mandataire : **Trolliet, Maurice et al**
**RHONE-POULENC INTERSERVICES Service Brevets Chimie Centre de Recherches de Saint-Fons B.P. 62**
**F-69192 Saint-Fons Cédex (FR)**

**EP 0 196 981 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne un procédé de préparation de copolyamides homogènes, ayant à la fois un point de fusion élevé et une bonne souplesse, à partir d'hexaméthylènediamine, d'acide adipique pris seul ou en mélange avec au moins un autre diacide carboxylique à chaîne courte et d'un dimère d'acide gras, la quantité de diacide(s) court(s) par rapport à la quantité totale des acides présents [acide(s) court(s) + acide dimère] se situant dans l'intervalle allant de 50 à 99 % en mole.

Des copolyamides de cette nature à base d'hexaméthylènediamine, d'acide adipique et d'acide dimère sont déjà décrits par la demanderesse dans le brevet français 2 459 810. Par copolyamide homogène, on entend définir un copolymère ne présentant qu'une seule phase à l'état fondu ou une seule phase amorphe à l'état solide ainsi qu'on peut le constater, par exemple, par microscopie électronique de balayage révélant l'éventuelle phase dispersée par fixation d'acide phosphotungstique.

Un moyen beaucoup plus simple pour constater cette homogénéité consiste à observer l'état de transparence d'une part d'une masse fondue ayant environ de 0,2 à 0,5 cm d'épaisseur chauffée à une température supérieure d'au moins 10 °C à son point de fusion et d'autre part d'un film ou jonc de faible diamètre obtenu à partir de cette masse fondue après refroidissement rapide par exemple par immersion dans l'eau à température ambiante. Un film ou jonc absolument transparent indique une homogénéité parfaite du polymère ; si le film a une épaisseur plus importante ou si le refroidissement a été plus lent, une zone translucide peut être le signe d'une certaine cristallinité ; un film blanc comportant des traînées ou des inclusions (œils par exemple) est le signe d'une hétérogénéité importante. Cette homogénéité fait que les copolymères en question présentent, outre de bonnes propriétés de transparence, des propriétés thermomécaniques qui sont facilement reproductibles. Par copolyamide ayant une bonne souplesse, on entend définir un copolyamide dont le module en flexion sera sensiblement inférieur à celui des polyamides conventionnels comme le polyhexaméthylènediamine (nylon 66) ou le polycaprolactame (nylon 6) et sera de l'ordre ou inférieur à celui des polyamides considérés comme souples tel que par exemple le polyundécanamide (nylon 11).

Dans le type de copolyamides de cet art antérieur, la cristallinité et par conséquent la faculté d'obtenir des points de fusion élevés et de bonnes propriétés thermomécaniques sont essentiellement apportées par l'ensemble des segments qui dérivent de la condensation des molécules d'acide court (acide adipique) sur une partie des molécules d'hexaméthylènediamine. La faculté d'avoir la souplesse et une bonne élasticité est essentiellement apportée par l'ensemble des segments qui dérivent de la condensation des molécules de dimère d'acide gras sur l'autre partie des molécules d'hexaméthylènediamine. Il va de soi qu'en faisant varier la quantité d'acide court par rapport à la quantité totale des acides présents dans l'intervalle allant de 50 à 99 % en mole, on obtient des copolyamides dont le point de fusion sera plus ou moins élevé et dont la souplesse sera plus ou moins grande. Les copolyamides dont la quantité d'acide court se situe dans l'intervalle allant de 70 à 90 % en mole présentent un intérêt particulier car ils ont à la fois un point de fusion élevé et une excellente souplesse.

Dans le brevet français précité, on décrit encore plusieurs procédés spécifiques permettant de préparer de pareils copolyamides homogènes. Selon un premier procédé, on réalise les étapes suivantes :

1. On prépare en milieu hétérogène des prépolymères à partir d'un mélange d'acide adipique, d'acide dimère et d'hexaméthylènediamine ou de leurs sels correspondants, les quantités des constituants du mélange de départ étant telles que la quantité d'acide adipique par rapport aux acides totaux se situe dans l'intervalle allant de 50 à 99 % en mole et que les teneurs en groupements aminés et en groupements carboxyliques ne diffèrent pas de plus de 5 % en valeur absolue, la réaction de polymérisation consistant, dans un intervalle de temps allant de 30 minutes à plusieurs heures, à amener de façon progressive et régulière le mélange de départ par chauffage jusqu'à 270 °C sous une pression de vapeur d'eau comprise entre 1,3 et 2,5 MPa ce qui est l'état d'équilibre chimique correspondant au début de la phase (2) suivante ;

2. On effectue ensuite une phase d'homogénéisation d'une durée comprise entre 0,5 et 5 heures, à une température comprise entre 270 et 290 °C sous une pression de vapeur d'eau comprise entre 1,3 et 2,5 MPa pendant laquelle l'état d'équilibre des réactions d'amidification n'est pas modifié ;

3. Et l'on procède enfin à une polycondensation de façon à transformer les prépolymères homogènes ainsi obtenus en copolyamides souhaités, la réaction de polycondensation étant opérée de manière classique à une température comprise entre 260 et 290 °C sous pression atmosphérique ou sous une pression inférieure, pendant une durée allant de 30 minutes à plusieurs heures.

Selon un second procédé, on réalise les étapes suivantes :

1. On prépare en milieu hétérogène des prépolymères à partir d'un mélange d'acide adipique, d'acide dimère et d'hexaméthylènediamine ou de leurs sels correspondants, les quantités des constituants du mélange de départ étant telles que la quantité d'acide adipique par rapport aux acides totaux se situe dans l'intervalle allant de 50 à 99 % en mole et que les teneurs en groupements aminés et en

groupements carboxyliques diffèrent de plus de 5 % en valeur absolue, la réaction de prépolymérisation consistant, dans un intervalle de temps allant de 30 minutes à plusieurs heures, à amener de façon progessive et régulière le mélange de départ à une température correspondant au début de la phase (2) suivante ;

2. On effectue ensuite une phase d'homogénéisation d'une durée comprise entre 10 minutes et 2 heures à une température comprise entre 265 et 290 °C ;

3. Et l'on procède enfin à l'addition progressive du réactif en défaut de manière classique et l'on achève la polycondensation à des températures comprises entre 260 et 290 °C sous pression atmosphérique ou sous une pression inférieure pendant une durée allant de 30 minutes à plusieurs heures jusqu'à l'obtention des copolyamides souhaités.

Enfin, selon un troisième procédé, on prépare de façon directe à une température comprise entre 150 et 300 °C, en milieu homogène, des copolymères à partir d'un mélange d'acide adipique, d'acide dimère et d'hexaméthylènediamine, la quantité d'acide adipique par rapport aux acides totaux se situant dans l'intervalle allant de 50 à 99 % en mole et les teneurs en groupements aminés et en groupements carboxyliques ne différant pas de plus de 5 % en valeur absolue, le milieu étant rendu homogène par l'utilisation d'un tiers solvant du mélange des trois produits de départ ou des sels correspondants et/ou des oligomères d'acide adipique et d'hexaméthylènediamine et d'acide dimère et d'hexaméthylènediamine de masse moléculaire inférieure à 5 000, ledit solvant état inerte vis-à-vis des réactifs et des réactions d'amidification.

Poursuivant des travaux dans ce domaine de la technique, la demanderesse a maintenant trouvé qu'il est possible de préparer les copolyamides homogènes en faisant appel à un procédé permettant de s'affranchir :

de la mise en œuvre de l'étape intermédiaire d'homogénéisation à température élevée qui est de nature à augmenter exagérément la durée d'occupation des réacteurs industriels et à entraîner prématurément une certaine dégradation des copolyamides,

et de la mise en œuvre d'un solvant organique dont la récupération est de nature à pouvoir créer des difficultés complémentaires.

Plus spécifiquement, la présente invention concerne un procédé de préparation de copolyamides homogènes, ayant à la fois un point de fusion élevé et une bonne souplesse, à partir d'hexaméthylènediamine, de diacide(s) carboxylique(s) à chaîne courte et d'un dimère d'acide gras, la quantité d'acide(s) court(s) par rapport à la quantité totale des acides présents se situant dans l'intervalle allant de 50 à 99 % en mole, ledit procédé étant caractérisé par les points suivants :

dans une première étape (a), on prépare un prépolymère à groupements terminaux aminés en faisant réagir, éventuellement en présence d'eau, les composés consistant :

— (i) soit dans le mélange des constituants suivants : acide adipique, éventuellement au moins un autre diacide carboxylique à chaîne courte de nature cycloaliphatique saturée ou aromatique, hexaméthylènediamine et un catalyseur consistant soit en un composé (alpha), soit en un composé (béta), (alpha) désigant un oxyacide minéral ou un oxyacide organique autre qu'un acide carboxylique, dont l'une au moins des fonctions acides, quand il y en a plusieurs, possède une constante d'ionisation pKa dans l'eau à 25 °C égale ou inférieure à 4, (béta) désignant un sel alcalin ou alcalino-terreux de cet acide,

— (ii) soit dans le mélange des constituants suivants : sel(s) stoechiométrique(s) d'acide(s) court(s) précité(s) et d'hexaméthylènediamine, hexaméthylènediamine libre et le catalyseur défini ci-avant,

cette première étape (a) étant conduite dans un système éventuellement clos du type autoclave en amenant progressivement par chauffage le mélange de départ sous une pression autogène de vapeur d'eau se situant dans l'intervalle allant de la pression atmosphérique à 3 MPa, puis en éliminant, par distillation, de l'eau présente dans le mélange réactionnel de manière à amener la température de la masse en fin de cette étape à une valeur allant de 170 à 250 °C ;

dans une seconde étape (b), on fait réagir le prépolymère obtenu avec le dimère d'acide gras, cette polycondensation étant conduite en opérant à une température allant de 250 à 280 °C, sous une pression de vapeur d'eau qui décroît progressivement d'une valeur égale à la pression de prépolymérisation jusqu'à une valeur pouvant être la pression atmosphérique [dans le cas où l'étape (a) est conduite sous une pression supérieure à la pression atmosphérique] ou une pression inférieure à cette dernière [dans les cas où l'étape (a) est conduite sous une pression supérieure ou égale à la pression atmosphérique] et pendant une durée suffisante pour obtenir un copolyamide de viscosité souhaitée ;

les proportions des divers constituants sont telles que :

— la quantité d'acide(s) court(s) par rapport à l'ensemble acide(s) court(s) + acide dimère va de 50 à 99 % en mole,

— le rapport $r_1$ du nombre de moles d'hexaméthylènediamine mises en œuvre dans l'étape (a), alternative (i), par rapport au nombre total de moles d'acides(s) court(s) et d'acide dimère est égal à 1 ou éventuellement égal à une valeur, supérieure à la stoechiométrie, déterminée de manière à introduire dans le mélange réactionnel un excès d'hexaméthylènediamine permettant de compenser la perte de ce réactif qui peut intervenir lors de l'étape (a) pendant la distillation et/ou lors de l'étape (b) pendant la décompression,

— le rapport $r_2$ du nombre de moles d'hexaméthylènediamine libre mises en œuvre dans l'étape (a),

alternative (ii), par rapport au nombre de moles d'acide dimère possède les valeurs indiqués ci-avant pour le rapport $r_1$.

Dans le présent mémoire, la pression dont on parle est toujours la pression absolue.

Par « eau présente dans le mélange réactionnel », on entend définir l'eau qui se forme au cours de la polycondensation de (ou des) acide(s) court(s) avec l'hexaméthylènediamine, plus éventuellement l'eau introduite au départ avec les constituants du mélange réactionnel. La quantité d'eau éventuellement introduite au départ n'est pas critique et peut varier dans de larges limites.

Par « copolyamide de viscosité souhaitée », on entend définir un copolyamide ayant une viscosité à l'état fondu suffisamment élevée pour pouvoir être injecté ou extrudé de façon convenable. Plus précisément, on entend définir un copolyamide ayant une viscosité à l'état fondu (mesurée dans les conditions définies ci-après) au moins égale à 1 500 poises et de préférence comprise entre 3 000 et 60 000 poises.

A propos de la perte d'hexaméthylènediamine dont on a parlé ci-avant, elle peut intervenir par exemple lorsque l'appareillage utilisé ne comporte pas de colonne de distillation ; dans ces conditions, pour un appareillage donné et pour des charges données, on peut connaeître à l'aide de techniques simples la quantité d'hexaméthylènediamine entraînée lors de chaque opération et par conséquence l'excès de ce réactif à introduire dans le mélange réactionnel de départ pour conserver l'équivalence entre les groupements amino et les groupements carboxy qui réagissent. De manière générale, quand il y a perte d'hexaméthylènediamine, elle est modérée et on a constaté que l'emploi de quantités de ce réactif conduisant pour les rapports $r_1$ et $r_2$ à des valeurs allant d'un nombre supérieur à 1 à 1,3 conviennent bien.

Il est bien entendu que par « acide(s) court(s) », on veut désigner l'acide adipique pris seul ou en mélange avec au moins un autre diacide carboxylique à chaîne courte de nature cycloaliphatique saturée ou aromatique. Plus précisément, les diacides carboxyliques cycloaliphatiques et/ou aromatiques pouvant entrer dans le cadre de la présente invention sont des composés ayant au plus 12 atomes de carbone ; comme diacides de ce type qui conviennent bien, on citera : l'acide cyclohexanedicarboxylique-1,4, l'acide isophtalique, l'acide téréphtalique. La proportion d'acide adipique, dans le mélange de diacides courts qui peut être mis en œuvre, représente habituellement au moins 70 % en mole.

Pendant l'étape d'homogénéisation mise en œuvre dans le brevet français précité, on pense que les groupements amino et carboxy, qui ne subissent plus à ce moment-là de réaction d'amidification, servent à faire des coupures des oligomères blocs d'acide adipique et d'hexaméthylènediamine et/ou des oligomères d'acide dimère et d'hexaméthylènediamine et qu'il se forme en conséquence un prépolymère statistique homogène. Dans le procédé conforme à la présente invention, on pense que le prépolymère formé dans l'étape (a) est sous la forme d'une structure polyhexaméthylène amide préformée homogène dont l'homogénéité, de façon surprenante, n'est pas modifiée par l'ajout subséquent d'acide dimère dont les oligomères avec l'hexaméthylènediamine sont pourtant incompatibles avec ceux du polyhexaméthylène amide préformé.

Les acides dimères employés sont obtenus par polymérisation de composés comprenant 80 à 100 % en poids d'acide(s) gras monomère(s) ayant de 16 à 20 atomes de carbone et 20 à 0 % en poids d'acide(s) gras monomère(s) ayant de 8 à 15 atomes de carbone et/ou de 21 à 24 atomes de carbone. Par acides gras monomères, on entend désigner des monoacides aliphatiques saturés ou insaturés, linéaires ou ramifiés.

Parmi les acides gras monomères saturés linéaires ou ramifiés, on peut citer : les acides caprylique, pélargonique, caprique, laurique, myristique, palmitique et isopalmitique, stéarique, archidique, behénique et lignocérique.

Parmi les acides gras monomères à insaturation(s) éthylènique(s) linéaires ou ramifiés on peut citer : les acides 3-octénoïque, 11-dodécénoïque, oléique, lauroléique, myristoléique, palmitoléique, gadoléique, cétoléique, linoléique, linolénique, eicosatétraénoïque et chaulmoogrique. Certains acides à insaturation acétylénique peuvent aussi conduire à des acides polymères, mais ils n'existent pas de façon intéressante à l'état naturel et de ce fait leur intérêt économique est très faible.

Les acides gras polymères obtenus par polymérisation à la chaleur, en présence éventuellement de catalyseurs comme des peroxydes ou des acides de Lewis, peuvent être fractionnés par exemple par des techniques classiques de distillation sous vide ou d'extraction par des solvants. On. peut aussi les hydrogéner pour réduire leur taux d'insaturation et ainsi réduire leur coloration.

Les acides dimères utilisés de préférence dans la présente invention sont des acides gras polymères fractionnés dans lesquels la fraction en acide difonctionnel est supérieure à 94 % en poids, la fraction en acide monofonctionnel est inférieure à 1 % en poids et plus préférentiellement encore égale ou inférieure à 0,5 % en poids, la fraction en acide de fonctionnalité supérieure à 2 est inférieure à 5 % en poids et plus préférentiellement encore égale ou inférieure à 3 % en poids.

Les acides dimères utilisés plus préférentiellement encore sont les espèces obtenues par fractionnement (conduisant aux fractions indiquées ci-avant) d'acides gras polymères ayant subi en plus une hydrogénation.

Les acides dimères qui conviennent tout spécialement bien sont les espèces obtenues par fractionnement d'une composition hydrogénée issue de la polymérisation catalytique d'acide(s) gras monomère(s) ayant 18 atomes de carbone. Dans ce contexte, en raison de leur facilité d'approvisionnement et de leur polymérisation relativement aisée, les acides oléique, linoléique et linolénique, pris seuls ou deux à deux ou de préférence sous forme de mélange ternaire, sont les produits de départ tout particulièrement préférés pour la préparation des acides gras polymères.

Pour ce qui est de l'oxyacide minéral ou organique fort (alpha) qui est engagé comme catalyseur, on fait appel, comme il est indiqué ci-avant, à un mono- ou un polyacide oxygéné dont l'une au moins des fonctions acides possède une constante d'ionisation pka dans l'eau à 25 °C égale ou inférieure à 4.

Comme acides forts qui conviennent on peut citer par exemple :

parmi les oxyacides minéraux, les acides sulfureux, sulfurique, hypophosphoreux, phosphoreux, orthophosphorique ou pyrophosphorique ;

parmi les oxyacides organiques ;

les acides organosulfoniques de formule $R_1$—$SO_3H$ (I) dans laquelle $R_1$ représente : un radical alkyle linéaire ou ramifié ayant de 1 à 6 atomes de carbone ; un radical phényle éventuellement substitué par 1 à 3 radicaux alkyles ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyles ayant de 1 à 3 atomes de carbone ; ou un radical naphtyle éventuellement substitué par 1 à 4 radicaux alkyles ayant de 1 à 3 atomes de carbone ;

les acides organophosphoniques de forme $R_2$—$P(O)(OH)_2$ (II) dans laquelle $R_2$ représente un radical alkyle, un radical phényle ou un radical phénylalkyle, chacun de ces radicaux ayant la définition donnée ci-avant pour $R_1$ ;

les acides organophosphiniques de formule $R_3R_4$—$P(O)(OH)$ (III) dans laquelle $R_3$ et $R_4$, identiques ou différents, représentent chacun : un radical alkyle linéaire ayant de 1 à 3 atomes de carbone ; un radical phényle ou un radical phénylalkyle, chacun de ces deux derniers radicaux ayant la définition donnée ci-avant pour $R_1$ ;

les acides organophosphoneux de forme $R_5H$—$P(O)(OH)$ (IV) dans laquelle $R_5$ représente : un radical alkyle linéaire ou ramifié ayant de 1 à 4 atomes de carbone (la ramification étant exclue pour un radical alkyle à 4 atomes de carbone) ; un radical phényle ou un radical phénylalkyle, chacun de ces deux derniers radicaux ayant la définition donnée ci-avant pour $R_1$.

On préfère utiliser comme acide fort (alpha), les acides dérivés du phosphore et plus particulièrement les acides hypophosphoreux, phosphoreux, orthophosphorique, pyrophosphorique, méthylphosphonique, phénylphosphonique, benzylphosphonique, diméthylphosphinique, diphénylphosphinique, méthylphénylphosphinique, dibenzylphosphinique, méthylphosphoneux, phénylphosphoneux ou benzylphosphoneux.

Pour ce qui est du sel d'acide (béta), on fait appel généralement à des sels de métaux alcalins ou de métaux alcalino-terreux dérivés des oxyacides minéraux ou organiques (alpha).

On préfère utiliser comme sel (béta), ceux qui sont totalement solubles dans le mélange réactionnel. Parmi ces sels (béta) préférés, conviennent bien les sels de sodium et de potassium issus des types particuliers d'oxyacides minéraux ou organiques (alpha) qui conviennent cités ci-avant. Les sels (béta) qui conviennent tout particulièrement bien sont les sels de sodium et de potassium issus des acides préférés dérivés du phosphore cités nommément ci-avant.

Les proportions d'acide fort (alpha) ou de sel (béta), exprimées en pourcentage en poids par rapport au copolyamide final, sont comprises généralement entre 0,01 et 1 % et de préférence entre 0,01 et 0,5 %. Les acides forts (alpha) ou leurs sels (béta) et notamment les composés de ce type dérivés du phosphore présentent, outre un effet catalytique lors de la réaction de polycondensation, l'intérêt d'apporter une certaine protection du copolyamide final contre la dégradation par la lumière.

Si on veut assurer une bonne marche du procédé selon la présente invention, on aura soin de respecter de façon la plus parfaite possible les proportions respectives des différents constituants mis en œuvre. Selon une modalité préférée de mise en œuvre, on engage dans l'étape (a) le (ou les) diacide(s) court(s) sous forme de son (ou de leurs) sel(s) avec l'hexaméthylènediamine (alternative ii). Pour réaliser d'une part la stœchiométrie dans la fabrication du (ou des) sel(s) d'acide(s) court(s) et d'hexaméthylènediamine et d'autre part la stœchiométrie ou le dépassement voulu de la stœchiométrie entre l'hexaméthylènediamine libre et l'acide dimère on peut opérer par pesée précise des réactifs de titre parfaitement connu au moment de la mise en œuvre. Il est possible de contrôler la stœchiométrie du (ou des) sel(s) d'acide(s) court(s) par mesure du pH de solutions échantillons obtenues par dilution du (ou des) sel(s) dans un solvant approprié. Il est possible encore de contrôler la stœchiométrie ou le dépassement voulu de stœchiométrie dans la réaction d'amidification entre les groupes amino libres du prépolymère et l'acide dimère par réglage de la viscosité qui peut être évaluée avantageusement par mesure in-situ du couple résistant de l'agitation mécanique du milieu de polycondensation de l'étape (b).

Pour la conduite du procédé selon l'invention, on peut engager l'hexaméthylènediamine à l'état solide, à l'état fondu ou sous forme de solution aqueuse. Le (ou les) sel(s) d'acide(s) court(s) et d'hexaméthylènediamine peut (ou peuvent) être engagé(s) également à l'état solide, à l'état fondu ou sous forme de solution aqueuse.

A propos de la conduite de l'étape (a) du procédé selon l'invention, on opère de préférence dans un système clos sous une pression autogène de vapeur d'eau qui est supérieure à la pression atmosphérique et au plus égale à 2 MPa. On indiquera que la pression autogène de vapeur d'eau souhaitée pour opérer la distillation est obtenue par un chauffage progressif, par exemple pendant une durée allant de 10 minutes

à 2 heures, jusqu'à une température allant de 150 à 220 °C.

A propos de la conduite de l'étape (b) du procédé selon la présente invention qui suit l'étage (a) conduite de la manière préférée indiquée ci-avant, on opère préférentiellement en enchaînant les étapes suivantes :

on introduit progressivement, par exemple pendant une durée allant de 10 minutes à 2 heures, soit la totalité de l'acide dimère, soit une partie de l'acide dimère représentant par exemple 70 à 95 % de la quantité totale à introduire dans le polymère,

tout en abaissant, dans le même temps, la pression de la valeur initiale de prépolymérisation jusqu'à la valeur de la pression atmosphérique,

tout en élevant encore, dans le même temps, la température du mélange réactionnel à une valeur supérieure à la température atteinte en fin de l'étape (a) et se situant dans l'intervalle allant de 250 à 280 °C,

et tout en assurant une distillation simultanée d'eau,

l'addition précitée d'acide dimère étant terminée, après avoir éventuellement continué l'agitation du mélange réactionnel à la température précitée, et sous la pression atmosphérique pendant une durée allant par exemple de 10 minutes à 1 heure, on établit alors progressivement, pendant une durée allant par exemple de 5 minutes à 1 heure, une pression réduite égale ou inférieure à $200.10^2$ Pa,

la pression réduite étant établie, on ajoute le cas échéant le restant d'acide dimère et on termine la polycondensation en continuant à agiter le milieu à la température précitée se situant dans l'intervalle de 250 à 280 °C, sous la pression réduite indiquée ci-avant, pendant une durée allant par exemple de 10 minutes à 1 heure tout en assurant encore une distillation simultanée d'eau résiduelle.

Dans le cas où l'étape (a) est conduite sous une pression autogène supérieure à la pression atmosphérique, il peut être avantageux, lorsque cette pression est voisine de (ou égale à) la valeur maximale de pression indiquée ci-avant dans le présent mémoire, d'opérer avant d'introduire tout ou partie de l'acide dimère une légère décompression qui abaisse la pression autogène de vapeur d'eau à une valeur $p_1$ qui est inférieure de 5 à 30 % à la pression de prépolymérisation. Il doit être entendu alors, dans le cadre de la mise en œuvre préférée de l'étape (b) mentionnée ci-avant, que l'on introduit progressivement tout ou partie de l'acide dimère tout en abaissant dans le même temps la pression, non plus de la valeur initiale de prépolymérisation, mais de la valeur $p_1$ jusqu'à la valeur de la pression atmosphérique.

On peut incorporer sans inconvénient dans le milieu de préparation des copolyamides obtenus conformément au présent procédé un ou plusieurs additifs tels que notamment : des stabilisants et des inhibiteurs de dégradation par oxydation, par l'ultraviolet, par la lumière ou par la chaleur ; des lubrifiants ; des matières colorantes ; des agents de nucléation ; des agents anti-mousses ; des charges minérales.

Le procédé selon l'invention permet d'obtenir des copolyamides homogènes présentant à la fois une bonne résistance thermo-mécanique due à leurs points de fusion élevés et une souplesse améliorée. Etant parfaitement homogènes, ils ont des propriétés de transparence améliorées et peuvent être mis en œuvre selon les techniques usuelles d'injection, extrusion ou filage pour donner des objets conformés : pièces, films ou fils de très grande régularité.

Les exemples qui suivent illustrent de manière non limitative comment la présente invention peut être mise en pratique.

Dans ces exemples un certain nombre de contrôles sont effectués. De même, diverses propriétés sont mesurées. On indique ci-après les modes opératoires et/ou les normes selon lesquelles ces contrôles et mesures sont effectués.

## Analyse microcalorimétrique

On caractérise les polymères par les caractéristiques de fusion telles que les endothermes de fusion Ef et les exothermes de cristallisation Ec.

Ces déterminations sont effectuées sur un échantillon soumis à des variations de température tant en montée qu'en descente de 10 °C/minute. On détermine ainsi une courbe par microcalorimétrie différentielle sur laquelle on peut repérer les points de fusion (Tf) et de cristallisation au refroidissement (Tc).

## Viscosité à l'état fondu

Elle est mesurée à 260 °C sous un gradient de cisaillement variable (indiqué ci-après dans les exemples) à l'aide d'un rhéomètre Davenport. Les résultats sont exprimés en poises.

## Détermination des groupements terminaux sur copolyamide

La méthode décrite ci-après permet de doser les deux types de groupements terminaux sur une seule prise d'essai et avec un seul titrage acidimétrique. Le polyamide est mis en solution à température ambiante sous agitation dans un mélange trifluoroéthanol/chloroforme. Après dissolution on ajoute une

solution hydroalcoolique d'hydroxyde de tétrabutylammonium 0,05 N et l'on réalise enfin un titrage potentiométrique par une solution titrée d'acide chlorhydrique 0,05 N sous balayage d'azote. L'exploitation de la courbe potentiométrique présentant deux sauts de potentiel permet la détermination des deux types de groupements terminaux.

Détermination des caractéristiques mécaniques en traction

Elles sont déterminées à 25 °C sur des éprouvettes conditionnées à EHO selon la norme NF T 51 034 (vitesse de traction de 10 mm/min sur dynamomètre de type Instron). Conditionnement à EHO : les éprouvettes sont placées en dessiccateur sur silicagel et séchées 24 heures à température ambiante sous 0,66 à $1{,}33.10^2$ Pa avant de réaliser les mesures.

Module en torsion

Il est déterminé à plusieurs températures (— 20 °C, 0 °C, + 20 °C, + 40 °C, + 60 °C) au pendule automatique de torsion sous une fréquence de l'ordre de 1 Hertz selon la norme ISO R 537. Les éprouvettes sont conditionnées à EHO. Les résultats sont exprimés en MPa.

Dans les exemples qui suivent, s'agissant de l'acide dimère mis en œuvre, on fait appel à un composé mis dans le commerce par la Société Unichema Chemie sous la marque déposée Pripol 1 010 dans lequel la fraction en acide difonctionnel est supérieure à 95 % en poids. Cette fraction en acide difonctionnel consiste en un mélange d'isomères ayant 36 atomes de carbone dont l'espèce prépondérante est un composé saturé de formule :

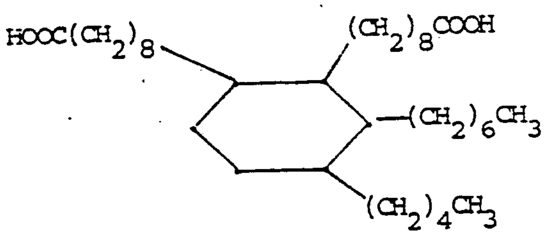

La fraction en acide monofonctionnel (dont le taux pondéral sera précisé ultérieurement) est constituée essentiellement par de l'acide oléique ; quant à la fraction en acide de fonctionnalité supérieure à 2 (dont le taux pondéral sera précisé également ultérieurement), elle est constituée essentiellement par un mélange de trimères isomères ayant 54 atomes de carbone ; la masse moléculaire moyenne de cet acide dimère est de l'ordre de 571.

Exemple 1

On opère dans un autoclave en acier inoxydable de 7,5 litres muni d'une agitation mécanique, d'un système de chauffage et d'un système permettant de travailler sous une pression supérieure à la pression atmosphérique ou sous une pression inférieure à la pression atmosphérique.

Etape (a)

On introduit à température ambiante dans l'appareil les charges suivantes :
sel à l'état solide et sec d'acide adipique et d'hexaméthylènediamine : 2 086,7 g (7,955 moles),
eau permutée : 700 g,
hexaméthylènediamine en solution aqueuse à 32,5 % en poids : 746,5 g (2,088 moles),
acide hypophosphoreux en solution aqueuse à 50 % en poids : 6 g,
antimousse silicone commercialisé par la Société Rhône-Poulenc.
Spécialités chimiques sous la marque déposée Rhodorsil Si 454 : 0,3 g.

L'agitation est mise en route et on effectue cinq purges à l'azote par mise sous pression de $7.10^5$ Pa, puis décompression. La température de la masse agitée est élevée progressivement en 1 heure 15 minutes jusqu'à 217 °C en maintenant la pression autogène : on atteint 1,8 MPa. On distille de l'eau sous pression en 2 heures de façon à atteindre une température de masse égale à 250 °C.

Etape (b)

On décomprime jusqu'à 1,5 MPa en maintenant la température à 250 °C. Puis on introduit dans le milieu agité, par coulée régulière en 1 heure 35 minutes, 895 g (1,567 moles) de dimère d'acide gras commercialisé sous la marque déposée Pripol 1 010 par la Société Unichema Chemie ayant un taux de monomère de 0,03 % en poids et un taux de trimère de 3 % en poids ; pendant le temps d'addition de l'acide dimère, l'autoclave est décomprimé progressivement jusqu'à la pression atmosphérique et la

température du milieu est élevée progressivement jusqu'à 270 °C.

On établit ensuite progressivement en 40 minutes une pression de $133.10^2$ Pa tout en maintenant la masse à 270 °C. La pression réduite étant établie, on introduit par coulée régulière encore 90 g (0,158 mole) d'acide dimère. On termine la polycondensation en continuant à agiter le milieu à 270 °C sous $133.10^2$ Pa pendant 30 minutes.

L'agitation est arrêtée, puis on établit dans l'autoclave une pression d'azote de $5.10^5$ Pa et on soutire le polymère. Ce dernier extrudé de l'autoclave sous forme de jonc, est refroidi par passage dans un bain d'eau froide, puis il est granulé et séché.

Le polymère obtenu est parfaitement transparent et donc homogène. Il présente les caractéristiques suivantes mesurées sur les granulés secs :

point de fusion (Tf) : 241 °C,
point de cristallisation au refroidissement (Tc) : 191 °C,
taux de groupes terminaux :
— COOH : 1,75 meq/kg
— $NH_2$ : 116,4 meq/kg
viscosité à l'état fondu à 260 °C sous un gradient de cisaillement :
$\gamma = 18,6\ s^{-1}$ : 6 000 poises.
propriétés mécaniques en traction :
— résistance à la rupture : 64,3 MPa,
— allongement à la rupture : 270 %,
— module en traction : 750 MPa,
propriétés thermomécaniques en torsion ; module de torsion à :
— — 20 °C : 600 MPa,
— 0 °C : 570 MPa,
— + 20 °C : 500 MPa,
— + 40 °C : 320 MPa,
— + 60 °C : 125 MPa.

## Exemple 2

On opère dans un autoclave en acier inoxydable de 7,5 litres équipé comme indiqué à l'exemple 1.

### Etape (a)

On introduit à température ambiante dans l'appareil les charges suivantes :
sel à l'état solide et sec d'acide adipique et d'hexaméthylènediamine : 1 043,3 g (3,978 moles),
hexaméthylènediamine en solution aqueuse à 32,15 % en poids : 1 424 g (3,939 moles),
acide hypophosphoreux en solution aqueuse à 50 % en poids : 6 g.
antimousse silicone décrit ci-avant à l'exemple 1 : 0,3 g.

L'agitation est mise en route et on effectue cinq purges à l'azote par mise sous pression de 1 MPa, puis décompression. La température de la masse agitée est élevée progressivement en 1 heure jusqu'à 217 °C en maintenant la pression autogène. On atteint 1,8 MPa. On distille de l'eau sous pression en 1 heure de façon à atteindre pour la masse une température de 230 °C.

### Etape (b)

On décomprime jusqu'à 1,5 MPa en maintenant la température à 230 °C. Puis on introduit dans le milieu agité, par coulée régulière en 1 heure 30 minutes, 1 566 g (2,743 moles) de dimère d'acide gras Pripol 1 010 décrit ci-avant à l'exemple 1 ; pendant le temps d'addition de l'acide dimère, l'autoclave est décomprimé progressivement jusqu'à la pression atmosphérique et la température de la masse est élevée progressivement jusqu'à 260 °C. La masse est agitée à 260 °C sous pression atmosphérique pendant 30 minutes.

On établit ensuite progressivement en 30 minutes une pression de $133.10^2$ Pa tout en maintenant la masse à 260 °C. La pression réduite étant établie, on introduit par coulée régulière encore 220 g (0,385 mole) d'acide dimère. On termine la polycondensation en continuant à agiter le milieu à 260 °C sous $133.10^2$ Pa pendant 30 minutes.

L'agitation est arrêtée, puis on établit dans l'autoclave une pression d'azote de $5.10^5$ Pa et on soutire le polymère. Ce dernier extrudé de l'autoclave sous forme de jonc, est refroidi par passage dans un bain d'eau froide, puis il est granulé et séché.

Le polymère obtenu est parfaitement transparent et donc homogène. Il présente les caractéristiques suivantes mesurées sur les granulés secs :

point de fusion (Tf) : 214 °C,
point de cristallisation au refroidissement (Tc) : 145 °C,
taux de groupes terminaux :
— COOH : 54,48 meq/kg,

— $NH_2$ : 9,47 meq/kg
viscosité à l'état fondu à 260 °C sous un gradient de cisaillement : $\gamma = 10\ s^{-1}$ : 4 000 poises.
propriétés mécaniques en traction :
— résistance à la rupture : 49,7 MPa,
— allongement à la rupture : 300 %,
— module en traction : 325 MPa.
propriétés thermomécaniques en torsion ; module de torsion à :
— — 20 °C : 470 MPa,
— 0 °C : 400 MPa,
— + 20 °C : 235 MPa,
— + 40 °C : 100 MPa.

A titre d'essai comparatif, on reproduit l'exemple précédent mais en n'utilisant pas cette fois de catalyseur (acide hypophosphoreux) ; les charges des réactifs sont les suivantes :

Etape (a)

sel à l'état solide et sec d'acide adipique et d'hexaméthylènediamine : 1 043,3 g (3,978 moles),
hexaméthylènediamine en solution aqueuse à 32,15 % en poids : 1 244,8 g (3,450 moles),
antimousse silicone Si 454 : 0,3 g.

Etape (b)

première addition d'acide dimère : 1 716 g (3,005 moles),
seconde addition d'acide dimère : 126 g (0,220 mole).

Le polymère obtenu est parfaitement transparent et donc homogène. Mais les taux de groupements terminaux obtenus :
— COOH : 68,5 meg/kg,
— $NH_2$ : 55 meg/kg
sont importants et ce résultat indique bien un ralentissement de la polycondensation en absence de l'acide hypophosphoreux. On note par ailleurs que la viscosité à l'état fondu, mesurée à 260 °C sous un gradient $\gamma = 10\ s^{-1}$, est faible et de l'ordre de 900 poises.

**Revendications**

1. Procédé de préparation de copolyamides homogènes, ayant à la fois un point de fusion élevé et une bonne souplesse, à partir d'hexaméthylènediamine, de diacide(s) carboxylique(s) à chaîne courte et d'un dimère d'acide gras, la quantité d'acide(s) court(s) par rapport à la quantité totale des acides présents se situant dans l'intervalle allant de 50 à 99 % en mole, ledit procédé étant caractérisé par les points suivants :

dans une première étape (a), on prépare un prépolymère à groupements terminaux aminés en faisant réagir, éventuellement en présence d'eau, les composés consistant :

(i) soit dans le mélange des constituants suivants : acide adipique, éventuellement au moins un autre diacide carboxylique à chaîne courte de nature cycloaliphatique saturée ou aromatique, hexaméthylènediamine et un catalyseur consistant soit en un composé (alpha), soit en un composé (béta), (alpha) désignant un oxyacide minéral ou un oxyacide organique autre qu'un acide carboxylique, dont l'une au moins des fonctions acides, quand il y en a plusieurs, possède une constante d'ionisation pKa dans l'eau à 25 °C égale ou inférieure à 4, (béta) désignant un sel alcalin ou alcalino-terreux de cet acide,

(ii) soit dans le mélange des constituants suivants : sel(s) stœchiométrique(s) d'acide(s) court(s) précité(s) et d'hexaméthylènediamine, hexaméthylènediamine libre et le catalyseur défini ci-avant,

cette première étape (a) étant conduite dans un système éventuellement clos du type autoclave en amenant progressivement par chauffage le mélange de départ sous une pression autogène de vapeur d'eau se situant dans l'intervalle allant de la pression atmosphérique à 3 MPa, puis en éliminant, par distillation, de l'eau présente dans le mélange réactionnel de manière à amener la température de la masse en fin de cette étape à une valeur allant de 170 à 250 °C ;

dans une seconde étape (b), on fait réagir le prépolymère obtenu avec le dimère d'acide gras, cette polycondensation étant conduite en opérant à une température allant de 250 à 280 °C, sous une pression de vapeur d'eau qui décroît progressivement d'une valeur égale à la pression de prépolymérisation jusqu'à une valeur pouvant être la pression atmosphérique ou une pression inférieure à cette dernière et pendant une durée suffisante pour obtenir un copolyamide de viscosité souhaitée ;

les proportions des divers constituants sont telles que :

— la quantité d'acide(s) court(s) par rapport à l'ensemble acide(s) court(s) + acide dimère va de 50 à 99 % en mole,

— le rapport $r_1$ du nombre de moles d'hexaméthylènediamine mises en œuvre dans l'étape (a), alternative (i), par rapport au nombre total de moles d'acide(s) court(s) et d'acide dimère est égal à 1 ou

éventuellement égal à une valeur, supérieure à la stœchiométrie, déterminée de manière à introduire dans le mélange réactionnel un excès d'hexaméthylènediamine permettant de compenser la perte de ce réactif qui peut intervenir lors de l'étape (a) pendant la distillation et/ou lors de l'étape (b) pendant la décompression,

— le rapport $r_2$ du nombre de moles d'hexaméthylènediamine libre mises en œuvre dans l'étape (a), alternative (ii), par rapport au nombre de moles d'acide dimère possède les valeurs indiquées ci-avant pour le rapport $r_1$.

2. Procédé selon la revendication 1, caractérisé en ce que les acides courts employés consistent dans l'acide adipique pris seul ou en mélange avec au moins un autre diacide carboxylique pris dans le groupe formé par l'acide cyclohexanedicarboxylique-1,4, l'acide isophtalique, l'acide téréphtalique, la proportion d'acide adipique dans le mélange représentant au moins 70 % en mole.

3. Procédé selon l'une quelconque des revendications 1 ou 2, caractérisé en ce que les acides dimères employés sont obtenus par polymérisation et fractionnement de composés comprenant 80 à 100 % en poids d'acide(s) gras monomère(s) ayant de 16 à 20 atomes de carbone et 20 à 0 % en poids d'acide(s) gras monomère(s) ayant de 8 à 15 atomes de carbone et/ou de 21 à 24 atomes de carbone, lesdits acides dimères comprenant une fraction en acide difonctionnel qui est supérieure à 94 % en poids, une fraction en acide monofonctionnel qui est inférieure à 1 % en poids et une fraction en acide de fonctionnalité supérieure à 2 qui est inférieure à 5 % en poids.

4. Procédé selon la revendication 3, caractérisé en ce que les acides dimères auxquels on fait appel consistent dans les espèces obtenues par fractionnement d'une composition hydrogénée issue de la polymérisation catalytique d'acide(s) gras monomère(s) ayant 18 atomes de carbone.

5. Procédé selon l'une quelconque des revendications 1 à 4, caractérisé en ce que le catalyseur (alpha) auquel on fait appel consiste dans les espèces suivantes :

parmi les oxyacides minéraux, les acides sulfureux, sulfurique, hypophosphoreux, phosphoreux, orthophosphorique ou pyrophosphorique ;

parmi les oxyacides organiques :

— les acides organosulfoniques de formule $R_1$—$SO_3H$ (I) dans laquelle $R_1$ représente : un radical alkyle linéaire ou ramifié ayant de 1 à 6 atomes de carbone ; un radical phényle éventuellement substitué par 1 à 3 radicaux alkyles ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyles ayant de 1 à 3 atomes de carbone ; ou un radical naphtyle éventuellement substitué par 1 à 4 radicaux alkyles ayant de 1 à 3 atomes de carbone ;

— les acides organophosphoniques de formule $R_2$—$P(O)(OH)_2$ (II) dans laquelle $R_2$ représente un radical alkyle, un radical phényle ou un radical phénylalkyle, chacun de ces radicaux ayant la définition donnée ci-avant pour $R_1$ ;

— les acides organophosphiniques de formule $R_3R_4$—$P(O)(OH)$ (III) dans laquelle $R_3$ et $R_4$, identiques ou différents, représentent chacun : un radical alkyle linéaire ayant de 1 à 3 atomes de carbone ; un radical phényle ou un radical phénylalkyle, chacun de ces deux derniers radicaux ayant la définition donnée ci-avant pour $R_1$ ;

— les acides organophosphoneux de formule $R_5H$—$P(O)(OH)$ (IV) dans laquelle $R_5$ représente : un radical alkyle linéaire ou ramifié ayant de 1 à 4 atomes de carbone (la ramification étant exclue pour un radical alkyle à 4 atomes de carbone) ; un radical phényle ou un radical phénylalkyle, chacun de ces deux derniers radicaux ayant la définition donnée ci-avant pour $R_1$.

6. Procédé selon la revendication 5, caractérisé en ce que les acides (alpha) auxquels on fait appel consistent dans les acides dérivés du phosphore appartenant au groupe des acides hypophosphoreux, phosphoreux, orthophosphorique, pyrophosphorique, méthylphosphonique, phénylphosphonique, benzylphosphonique, diméthylphosphinique, diphénylphosphinique, méthylphénylphosphinique, dibenzylphosphinique, méthylphosphoneux, phénylphosphoneux ou benzylphosphoneux.

7. Procédé selon l'une quelconque des revendications 1 à 4, caractérisé en ce que le catalyseur (béta) auquel on fait appel consiste dans les sels de sodium et de potassium issus des acides cités ci-avant dans la revendication 4 et, de préférence, dans les sels de sodium et de potassium issus des acides dérivés du phosphore cités ci-avant dans la revendication 5.

8. Procédé selon l'une quelconque des revendications 5 à 7, caractérisé en ce que les proportions d'acide fort (alpha) ou de sel (béta), exprimées en pourcentage en poids par rapport au copolyamide final, sont comprises généralement entre 0,01 et 1 % et de préférence entre 0,01 et 0,5 %.

9. Procédé selon l'une quelconque des revendications 1 à 8, caractérisé en ce que l'étape (a) est opérée dans un système clos sous une pression autogène de vapeur d'eau qui est supérieure à la pression atmosphérique et au plus égale à 2 MPa.

10. Procédé selon la revendication 9, caractérisé en ce que l'étape (b) est mise en œuvre en enchaînant les étapes suivantes :

on introduit progressivement, pendant une durée allant de 10 minutes à 2 heures, soit la totalité de l'acide dimère, soit une partie de l'acide dimère représentant 70 à 95 % de la quantité totale à introduire dans le polymère,

— tout en abaissant, dans le même temps, la pression de la valeur initiale de prépolymérisation jusqu'à la valeur de la pression atmosphérique,

— tout en élevant encore, dans le même temps, la température du mélange réactionnel à une valeur supérieure à la température atteinte en fin de l'étape (a) et se situant dans l'intervalle allant de 250 à 280 °C,

— et tout en assurant une distillation simultanée d'eau,

l'addition précitée d'acide dimère étant terminée, après avoir éventuellement continué l'agitation du mélange réactionnel à la température précitée, et sous la pression atmosphérique pendant une durée allant de 10 minutes à 1 heure, on établit alors progressivement, pendant une durée allant de 5 minutes à 1 heure, une pression réduite égale ou inférieure à $200.10^2$ Pa,

la pression réduite étant établie, on ajoute le cas échéant le restant d'acide dimère et on termine la polycondensation en continuant à agiter le milieu à la température précitée se situant dans l'intervalle de 250 à 280 °C, sous la pression réduite indiquée ci-avant, pendant une durée allant de 10 minutes à 1 heure tout en assurant encore une distillation simultanée d'eau résiduelle.

**Claims**

1. Process for the preparation of homogeneous copolyamides having both a high melting point and good flexibility, from hexamethylenediamine, short-chain dicarboxylic acid(s) and a fatty acid dimer, the quantity of short acid(s) relative to the total quantity of the acids present being in the range from 50 to 99 mole%, the said process being characterized by the following points :

in a first step (a), a prepolymer having amino end groups is prepared by racting, optionally in the presence of water, the compounds consisting :

(i) either of the mixture of the following constituents : adipic acid, optionally at least one other short-chain dicarboxylic acid of a saturated cycloaliphatic or aromatic type, hexamethylenediamine, and a catalyst consisting either of a compound (alpha) or of a compound (beta), (alpha) denoting an inorganic oxyacid or an organic oxyacid other than a carboxylic acid, in which at least one of the acid groups, when there are several of these, has an ionization constant pKa in water at 25 °C which does not exceed 4, (beta) denoting an alkali metal or alkaline-earth metal salt of this acid,

(ii) or of the mixture of the following constituents : stoichiometric salt(s) of the abovementioned short acid(s) with hexamethylenediamine, free hexamethylenediamine and the catalyst defined above, this first step (a) being carried out in an optionally closed system of the autoclave type by raising the starting mixture gradually by heating under an autogenous water vapour pressure in the range from atmospheric pressure to 3 MPa, and then by removing the water present in the reaction mixture by distillation so as to bring the temperature of the mass at the end of this step to a value ranging from 170 to 250 °C ;

in a second step (b), the prepolymer obtained is reacted with the fatty acid dimer, this polycondensation being carried out by operating at a temperature ranging from 250 to 280 °C, at a water vapour pressure which gradually decreases from a value equal to the prepolymerization pressure to a value which can be atmospheric pressure or a pressure below the latter and for a period which is sufficient to produce a copolyamide with the required viscosity ;

the proportions of the various constituents are such that :

— the quantity of short acid(s) relative to the combination of short acid(s) + dimer acid ranges from 50 to 99 mole%,

— the ratio $r_1$ of the number of moles of hexamethylenediamine employed in step (a), variant (i), relative to the total number of moles of short acid(s) and of dimer acid is equal to 1 or optionally equal to a value which is higher than the stoichiometry and is determined so as to introduce into the reaction mixture an excess of hexamethylenediamine which makes it possible to compensate for the loss of this reactant which may occur in step (a) during the distillation and/or in step (b) during the decompression,

— the ratio $r_2$ of the number of moles of free hexamethylenediamine employed in step (a), variant (ii), relative to the number of moles of dimer acid has the values indicated above for the ratio $r_1$.

2. Process according to Claim 1, characterized in that the short acids used consist of adipic acid by itself or mixed with at least one other dicarboxylic acid taken from the group consisting of 1,4-cyclohexanedicarboxylic acid, isophthalic acid, and terephthalic acid, the proportion of adipic acid in the mixture representing at least 70 mole%.

3. Process according to either of Claims 1 and 2, characterized in that the dimer acids used are obtained by polymerization and fractionation of compounds comprising 80 to 100 % by weight of monomeric fatty acid(s) containing from 16 to 20 carbon atoms and 20 to 0 % by weight of monomeric fatty acid(s) containing from 8 to 15 carbon atoms and/or from 21 to 24 carbon atoms, the said dimer acids comprising a difunctional acid fraction which is greater than 94 % by weight, a monofunctional acid fraction which is less than 1 % by weight and a fraction of acid of functionality greater than 2 which is less than 5 % by weight.

4. Process according to Claim 3, characterized in that the dimer acids which are used consist of the species obtained by fractionation of a hydrogenated composition originating from the catalytic polymerization of monomeric fatty acid(s) containing 18 carbon atoms.

5. Process according to any one of Claims 1 to 4, characterized in that the catalyst (alpha) which is

used consists of the following species :

among the inorganic oxyacids : sulphurous, sulphuric, hypophosphorous, phosphorous, orthophosphoric or pyrophosphoric acids ;

among the organic oxyacids :

— the organosulphonic acids of formula $R_1$—$SO_3H$ (I) in which $R_1$ denotes : a straight-chain or branched alkyl radical containing from 1 to 6 carbon atoms ; a phenyl radical optionally substituted by 1 to 3 alkyl radicals containing from 1 to 3 carbon atoms ; a phenylalkyl radical containing from 1 to 3 carbon atoms in the alkyl moiety and in which the benzene nucleus may optionally be substituted by 1 to 3 alkyl radicals containing from 1 to 3 carbon atoms ; or a naphthyl radical optionally substituted by 1 to 4 alkyl radicals containing from 1 to 3 carbon atoms ;

— the organophosphonic acids of formula $R_2$—P(O) $(OH)_2$ (II) in which $R_2$ denotes an alkyl radical, a phenyl radical or a phenylalkyl radical, each of these radicals having the definition given above for $R_1$ ;

— the organophosphinic acids of formula $R_3R_4$—P(O) (OH) (III) in which $R_3$ and $R_4$, which are identical or different, each denote : a straight-chain alkyl radical containing from 1 to 3 carbon atoms ; a phenyl radical or a phenylalkyl radical, each of the latter two radicals having the definition given above for $R_1$ ;

— the organophosphonous acids of formula $R_5$H—P(O) (OH) (IV), in which $R_5$ denotes : a straight-chain or branched alkyl radical containing from 1 to 4 carbon atoms (the branching being excluded for an alkyl radical containing 4 carbon atoms) ; a phenyl radical or a phenylalkyl radical, each of the latter two radicals having the definition given above for $R_1$.

6. Process according to Claim 5, characterized in that the acids (alpha) which are used consist of the phosphorus-derived acids belonging to the group of hypophosphorous, phosphorous, orthophosphoric, pyrophosphoric, methylphosphonic, phenylphosphonic, benzylphosphonic, dimethylphosphinic, diphenylphosphinic, methylpehnylphosphinic, dibenzylphosphinic, methylphosphonous, phenylphosphonous or benzylphosphonous acids.

7. Process according to any one of Claims 1 to 4, characterized in that the catalyst (beta) which is used consists of the sodium and potassium salts derived from the acids referred to above in Claim 4 and, preferably of the sodium and potassium salts originating from the phosphorus-derived acids mentioned above in Claim 5.

8. Process according to any one of Claims 5 to 7, characterized in that the proportions of strong acid (alpha) or of salt (beta), expressed as a weight percentage relative to the final copolyamide, are generally between 0.01 and 1 % and preferably between 0.01 and 0.5 %.

9. Process according to any one of Claims 1 to 8, characterized in that step (a) is carried out in a closed system under autogenous water vapour pressure which is greater than atmospheric pressure and does not exceed 2 MPa.

10. Process according to Claim 9, characterized in that step (b) is carried out by linking the following steps :

either all of the dimer acid, or a part of the dimer acid representing 70 to 95 % of the total quantity to be introduced into the polymer, is added gradually, over a period ranging from 10 minutes to 2 hours,

— while the pressure is reduced at the same time from the initial prepolymerization value down to the value of atmospheric pressure,

— while the temperature of the reaction mixture is also raised for the same period to a value above the temperature reached at the end of step (a) and lying in the range from 250 to 280 °C,

— and while ensuring simultaneous distillation of water,

when the abovementioned addition of dimer acid is finished, after stirring of the reaction mixture has continued, if appropriate, at the abovementioned temperature and at atmospheric pressure for a period ranging from 10 minutes to 1 hour, a reduced pressure not exceeding $200.10^2$ Pa is then gradually established over a period ranging from 5 minutes to 1 hour,

when the reduced pressure has been established, the remainder of the dimer acid is added where applicable and the polycondensation is completed by continuing to stir the mixture at the abovementioned temperature which lies in the range from 250 to 280 °C, at the reduced pressure indicated above, for a period ranging from 10 minutes to 1 hour, while simultaneously also ensuring a distillation of residual water.

**Patentansprüche**

1. Verfahren zur Herstellung von homogenen Copolyamiden, die gleichzeitig einen hohen Schmelzpunkt und gute Biegsamkeit haben, ausgehend von Hexamethylendiamin, Dicarbonsäure(n) mit kurzer Kette und einem Fettsäuredimeren, wobei die Menge an kurzer(kurzen) Säure(n) in bezug auf die Gesamtmenge der vorhandenen Säuren im Bereich von 50 bis 99 Mol-% liegt, wobei das Verfahren durch folgende Punkte gekennzeichnet ist :

in einer ersten Stufe (a) stellt man ein Präpolymeres mit aminierten Endgruppen her, indem gegebenenfalls in Gegenwart von Wasser die Verbindungen umgesetzt werden, bestehend aus :

(i) entweder dem Gemisch der folgenden Bestandteile : Adipinsäure, gegebenenfalls mindestens

eine andere Dicarbonsäure mit kurzer Kette von cycloaliphatischer gesättigter oder aromatischer Natur, Hexamethylendiamin und einem Katalysator, bestehend entweder aus einer Verbindung (alpha) oder aus einer Verbindung (beta), wobei (alpha) eine Mineraloxysäure oder eine organische Oxysäure, anders als eine Carbonsäure, ist, von der mindestens eine der Säurefunktionen, wenn mehrere vorhanden sind, eine Ionisationskonstante pKa in Wasser bei 25 °C gleich oder unterhalb 4 besitzt, (beta) ein Alkali- oder Erdalkalisalz dieser Säure ist, oder

(ii) einem Gemisch der folgenden Bestandteile : stöchiometrische(s) Salz(e) der vorgenannten kurzen Säure(n) und Hexamethylendiamin, freies Hexamethylendiamin und dem vorstehend definierten Katalysator,

wobei diese erste Stufe (a) in einem gegebenenfalls geschlossenen System vom Typ Autoklav durchgeführt wird, indem das Ausgangsgemisch durch Erhitzen fortschreitend unter einen autogenen Wasserstoffdruck in dem Bereich von atmosphärischem Druck bis 3 MPa geführt wird, indem dann durch Destillation das in dem Reaktionsgemisch vorhandene Wasser derart entfernt wird, daß die Temperatur der Masse am Ende dieser Stufe auf einen Wert von 170 bis 250 °C geführt wird ;

in einer zweiten Stufe (b) wird das erhaltene Präpolymere mit dem Fettsäuredimeren umgesetzt, wobei diese Polykondensation durchgeführt wird, indem bei einer Temperatur von 250 bis 280 °C unter einem Wasserdampfdruck gearbeitet wird, der fortschreitend von einem Wert gleich dem Präpolymerisationsdruck bis zu einem Wert, der Atmosphärendruck oder ein Druck unterhalb des letzteren sein kann, absinkt, und während einer Dauer, die ausreicht, um ein Copolyamid der gewünschten Viskosität zu erhalten ;

wobei die Mengenverhältnisse dieser verschiedenen Bestandteile derart sind, daß :

— die Menge der kurzen Säure(n) in bezug auf die Gesamtheit der kurzen Säure(n) + dimere Säure von 50 bis 99 Mol-% geht,

— das Verhältnis $r_1$ der Zahl der eingesetzten Mole Hexamethylendiamin in der Stufe (a), Alternative (i), in bezug auf die Gesamtzahl der Mole kurze Säuren(n) und dimere Säure gleich 1 oder gegebenenfalls gleich einem Wert oberhalb der Stöchiometrie ist, bestimmt derart, daß in das Reaktionsgemisch ein Überschuß an Hexamethylendiamin eingeführt wird, der es erlaubt, den Verlust dieses Reaktanten, der in der Stufe (a) während der Destillation und/oder in der Stufe (b) während der Entspannung eintreten kann, zu kompensieren,

— das Verhältnis $r_2$ der Anzahl der in der Stufe (a), Alternative (ii), eingesetzten Mole freies Hexamethylendiamin in bezug auf die Anzahl der Mole dimere Säure die vorstehend für das Verhältnis $r_1$ angegebenen Werte besitzt.

2. Verfahren gemäß Anspruch 1, dadurch gekennzeichnet, daß die verwendeten kurzen Säuren in Adipinsäure, allein genommen oder im Gemisch mit wenigstens einer anderen Dicarbonsäure, ausgewählt aus der Gruppe, gebildet von der 1,4-Cyclohexandicarbonsäure, Isophthalsäure, Terephthalsäure, bestehen, wobei das Verhältnis der Adipinsäure in dem Gemisch mindestens 70 Mol-% beträgt.

3. Verfahren gemäß einem der Ansprüche 1 oder 2, dadurch gekennzeichnet, daß die verwendeten dimeren Säuren erhalten sind durch Polymerisation und Fraktionierung von Verbindungen, umfassend 80 bis 100 Gew.% monomere Fettsäure(n) mit 16 bis 20 Kohlenstoffatomen und 20 bis 0 Gew.% monomere Fettsäure(n) mit 8 bis 15 Kohlenstoffatomen und/oder 21 bis 24 Kohlenstoffatomen, wobei diese dimeren Säuren umfassen eine Fraktion an difunktioneller Säure, die oberhalb 94 Gew.% ist, eine Fraktion an monofunktioneller Säure, die unterhalb 1 Gew.% ist, und eine Fraktion an Säure mit einer Funktionalität oberhalb 2, dier unterhalb 5 Gew.% ist.

4. Verfahren gemäß Anspruch 3, dadurch gekennzeichnet, daß die verwendeten dimeren Säuren in den Arten bestehen, die durch Fraktionierung einer hydrierten Zusammensetzung erhalten werden, die von der katalytischen Polymerisation der monomeren Fettsäure(n) mit 18 Kohlenstoffatomen stammt.

5. Verfahren gemäß einem der Ansprüche 1 bis 4, dadurch gekennzeichnet, daß der verwendete Katalysator (alpha) aus folgenden Arten besteht :

unter den Mineraloxysäuren die Schweflige Säure, Schwefelsäure, Hypophosphorige Säure, Phosphorige Säure, Orthophosphorsäure oder Pyrophosphorsäure ;

unter den organischen Oxysäuren :

— die Organosulfonsäuren der Formel $R_1—SO_3H$ (I), worin $R_1$ bedeutet : einen geraden oder verzweigten Alkylrest mit 1 bis 6 Kohlenstoffatomen ; einen Phenylrest, gegebenenfalls substituiert durch 1 bis 3 Alkylreste mit 1 bis 3 Kohlenstoffatomen ; einen Phenylalkylrest mit 1 bis 3 Kohlenstoffatomen im Alkylrest, dessen Benzolkern gegebenenfalls durch 1 bis 3 Alkylreste mit 1 bis 3 Kohlenstoffatomen substituiert sein kann ; oder einen Naphthylrest, gegebenenfalls substituiert durch 1 bis 4 Alkylreste mit 1 bis 3 Kohlenstoffatomen ;

— die Organophosphonsäuren der Formel $R_2—P(O)\ (OH)_2$ (II), worin $R_2$ einen Alkylrest, einen Phenylrest oder einen Phenylalkylrest bedeutet, wobei jeder dieser Reste die vorstehend für $R_1$ gegebene Definition hat ;

— die Organophosphinsäuren der Formel $R_3R_4—P(O)\ (OH)$ (III), worin $R_3$ und $R_4$, die identisch oder verschieden sind, jeweils bedeuten : einen geraden Alkylrest mit 1 bis 3 Kohlenstoffatomen ; einen Phenylrest oder einen Phenylalkylrest, wobei jeder dieser beiden letzteren Reste die vorstehend für $R_1$ angegebene Definition hat ;

— die Organophosphonigen Säuren der Formel $R_5H—P(O)\ (OH)$ (IV), worin $R_5$ bedeutet : einen

geraden oder verzweigten Alkylrest mit 1 bis 4 Kohlenstoffatomen (die Verzweigung ist für einen Alkylrest mit 4 Kohlenstoffatomen augeschlossen) ; einen Phenylrest oder einen Phenylalkylrest, wobei jeder dieser beiden letzteren Reste die vorstehend für $R_1$ angegebene Definition hat.

6. Verfahren gemäß Anspruch 5, dadurch gekennzeichnet, daß die verwendeten Säuren (alpha) in Säuren, abgeleitet von Phosphor, bestehen, gehörend zur Gruppe der Hypophosphorigen Säure, Phosphorigen Säure, Orthophosphorsäure, Pyrophosphorsäure, Methylphosphonsäure, Phenylphosphonsäure, Benzylphosphonsäure, Dimethylphosphinsäure, Diphenylphosphinsäure, Methylphenylphosphinsäure, Dibenzylphosphinsäure, Methylphosphonige Säure, Phenylphosphonige Säure oder Benzylphosphonige Säure.

7. Verfahren gemäß einem der Ansprüche 1 bis 4, dadurch gekennzeichnet, daß der verwendete Katalysator (beta) in den Natrium- und Kaliumsalzen besteht, die von den vorstehend in Anspruch 4 genannten Säuren stammen, und vorzugsweise in den Natrium- und Kaliumsalzen, die von Säuren stammen, die von Phosphor abgeleitet sind, die vorstehend in Anspruch 5 genannt sind.

8. Verfahren gemäß einem der Ansprüche 5 bis 7, dadurch gekennzeichnet, daß die Mengenverhältnisse starke Säure (alpha) oder Salz (beta), ausgedrückt in Gewichtsprozent in bezug auf das Endcopolyamid, im allgemeinen zwischen 0,01 und 1 % und vorzugsweise zwischen 0,01 und 0,5 % liegen.

9. Verfahren gemäß einem der Ansprüche 1 bis 8, dadurch gekennzeichnet, daß die Stufe (a) in einem geschlossenen System unter einem autogenen Wasserdampfdruck durchgeführt wird, der oberhalb des Atmosphärendrucks und höchstens gleich 2 MPa ist.

10. Verfahren gemäß Anspruch 9, dadurch gekennzeichnet, daß die Stufe (b) durchgeführt wird, indem die folgenden Stufen aneinandergereiht werden :

— man führt fortschreitend während einer Zeitdauer von 10 Minuten bis 2 Stunden entweder die Gesamtmenge der dimeren Säure oder einen Teil der dimeren Säure, bestehend aus 70 bis 95 % der Gesamtmenge, die in das Polymere eingeführt wird, ein,

— indem gleichzeitig der Druck von dem Anfangswert der Präpolymerisation bis zum Wert des Atmosphärendrucks erniedrigt wird,

— indem noch gleichzeitig die Temperatur des Reaktionsgemisches auf einen Wert oberhalb der am Ende der Stufe (a) erreichten Temperatur erhöht wird und die in dem Bereich von 250 bis 280 °C liegt,

— und indem eine gleichzeitige Destillation von Wasser sichergestellt wird,

wobei bei beendeter Zugabe der vorstehend erwähnten dimeren Säure, nachdem gegebenenfalls das Rühren des Reaktionsgemisches bei der vorstehend erwähnten Temperatur und unter Atmosphärendruck während einer Dauer von 10 Minuten bis 1 Stunde fortgesetzt worden ist, man dann fortschreitend während einer Zeitdauer von 5 Minuten bis 1 Stunde einen verminderten Druck gleich oder unterhalb $200 \times 10^2$ Pa herstellt,

— nach Herstellung des verminderten Drucks fügt man gegebenenfalls die verbleibende dimere Säure zu und beendet die Polykondensation, indem man fortfährt, das Milieu bei der vorstehend erwähnten Temperatur in dem Bereich von 250 bis 280 °C unter dem vorstehend angegebenen, verminderten Druck während einer Zeitdauer von 10 Minuten bis 1 Stunde zu rühren, wobei noch eine gleichzeitige Destillation von restlichem Wasser sichergestellt wird.